# EUROPEAN PATENT APPLICATION

(11) **EP 1 892 509 A1**
(43) Date of publication of application: **27.02.2008**
(21) Application number: 07114557.7
(22) Date of filing: 17.08.2007
(51) Int. Cl.: G01K 1/02, G06Q 10/00

(54) **Transportation Management System**

(30) Priority: 24.08.2006 JP 2006227575
(71) Applicant: Sanden Corporation, Isesaki-shi, Gunma 372-8502 (JP)
(72) Inventor: Iwasa, Kenji, Isesaki-shi Gunma 372-8502 (JP); Motegi, Toshiyuki, Isesaki-shi Gunma 372-8502 (JP); Suga, Masakazu, Isesaki-shi Gunma 372-8502 (JP)
(74) Representative: Haley, Stephen

(57) **Abstract**

A transportation management system includes: a communication device 11 having a communication module 11c and a communication antenna 11d provided at a storage box 10 for transmitting predetermined data to the outside world via a communication network N1, and a controller 11a provided at the storage box 10 for transmitting, during transportation by the communication module 11c and the communication antenna 11d, temperature data A including temperatures detected by a temperature sensor 10c during transportation; and a server 20 having a receiver 21 for receiving the predetermined data including the temperature data A transmitted by the communication device 11 via the communication network N1, the server obtaining the temperature data A received by the receiver 21.

## Description

The present invention relates to a transportation management system for managing transportation of articles such as blood, parts of organisms or drugs that require precise temperature management within certain levels.

Conventionally, a prior art solution is known in the art where when articles such as blood, parts of organisms or drugs that require precise temperature management within certain levels (referred hereinbelow as "constant-temperature-preserved articles") are transported in a cooling box, the constant-temperature-preserved articles are stored and transported in a cooling box including a temperature sensor for detecting the internal temperature of the cooling box and a temperature recording device capable of recording the detected data from the temperature sensor and outputting the detected data to the outside world, and then, upon arrival at its destination, temperature changes during transportation are determined by outputting data being stored in the temperature recording device to a external data processing device (see, for example, Japanese Patent Publication 2001-201223).

However, in the prior art, any temperature changes in a cooling box being transported could not be known in advance until the cooling box arrives at its destination, and degradation (temperature anomaly) could not be prevented that would be caused from the temperature changes in the cooling box during transportation.

The present invention is provided in view of the above problem, and an object of this invention is to provide a transportation management system that can manage the temperature of constant-temperature-preserved articles during transportation.

In order to achieve the above object, the present invention proposes a transportation management system for managing transportation of a heat-insulated storage box having constant-temperature-preserved articles stored therein and comprising temperature detection means for detecting the internal temperature, the transportation management system comprising: a communication device having transmitting means provided at the storage box for transmitting predetermined data to the outside world via a communication network, and temperature data transmission means provided at the storage box for transmitting, during transportation by the transmitting means, temperature data including temperatures detected by the temperature detection means during transportation; and a server having receiving means for receiving the predetermined data including the temperature data transmitted by the communication device via the communication network, the server obtaining the temperature data received by the receiving means.

In accordance with the transportation management system, the temperature of constant-temperature-preserved articles that are stored in a storage box being transported can be known during the transportation, and thus the temperature of the constant-temperature-preserved articles can be managed even if the internal temperature of the storage box changes during transportation. This may obviate any degradation of the constant-temperature-preserved articles during transportation, for example by informing transporters of the storage box of any temperature changes.

These and other objects of the present invention as well as characteristics and advantages thereof will be apparent from the following description and accompanying drawings.

In the Drawings;
FIG. 1 shows a configuration of a transportation management system in accordance with a first embodiment of the present invention;
FIG. 2 is a block diagram of a control system configuration of the storage box shown in FIG. 1 ;
FIG. 3 is a front view of a display and an input device provided on a surface of the storage box shown in FIG. 1;
FIG. 4 shows an operation configuration of the storage box shown in FIG. 1;
FIG. 5 is a flowchart of the departure operation shown in FIG. 4;
FIG. 6 is a flowchart of the in-transit operation shown in FIG. 4;
FIG. 7 shows an exemplary data structure of temperature data;
FIG. 8 is a flowchart of the arrival operation shown in FIG. 4;
FIG. 9 is a flowchart of the temperature management operation executed by the aggregation server shown in FIG. 1;
FIG. 10 shows a configuration of a transportation management system in accordance with a second embodiment of the present invention;
FIG. 11 shows an operation configuration of the storage box shown in FIG. 10;
FIG. 12 is a flowchart of the in-transit operation shown in FIG. 11;
FIG. 13 shows an exemplary data structure of position data;
FIG. 14 shows an operation configuration of the aggregation server shown in FIG. 10;
FIG. 15 is a flowchart of the position monitoring operation shown in FIG. 14; and
FIG. 16 shows a configuration of a transportation management system in accordance with a third embodiment of the present invention.

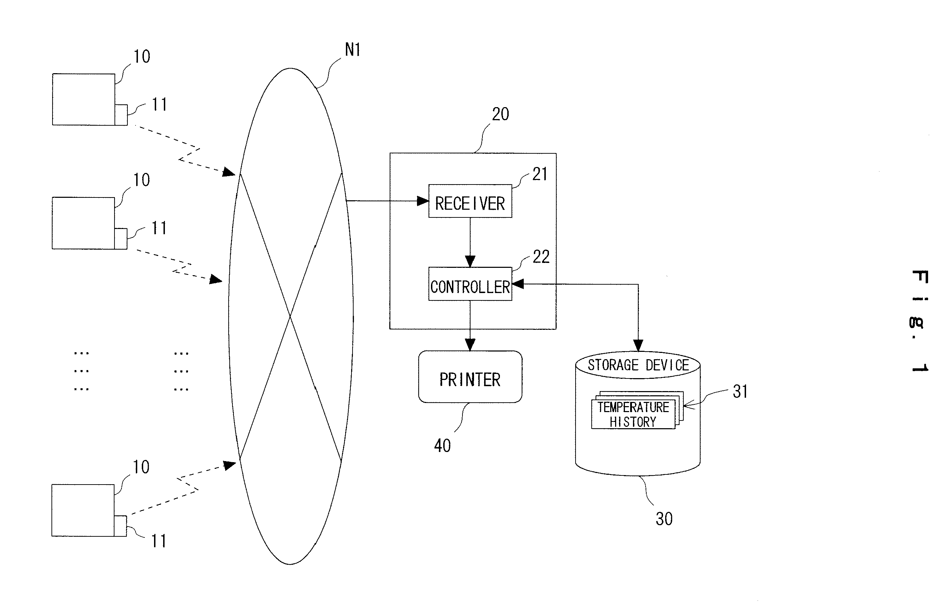

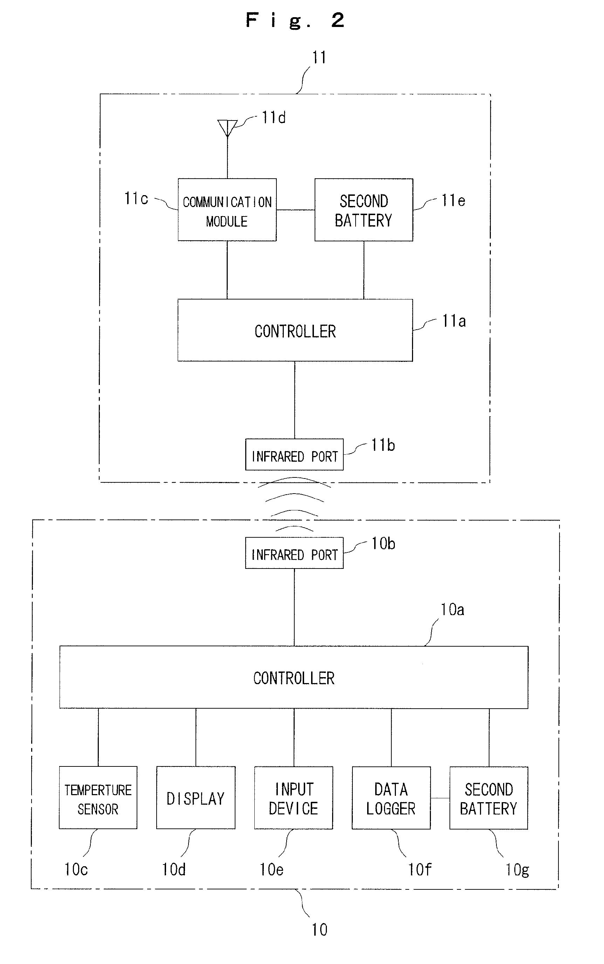

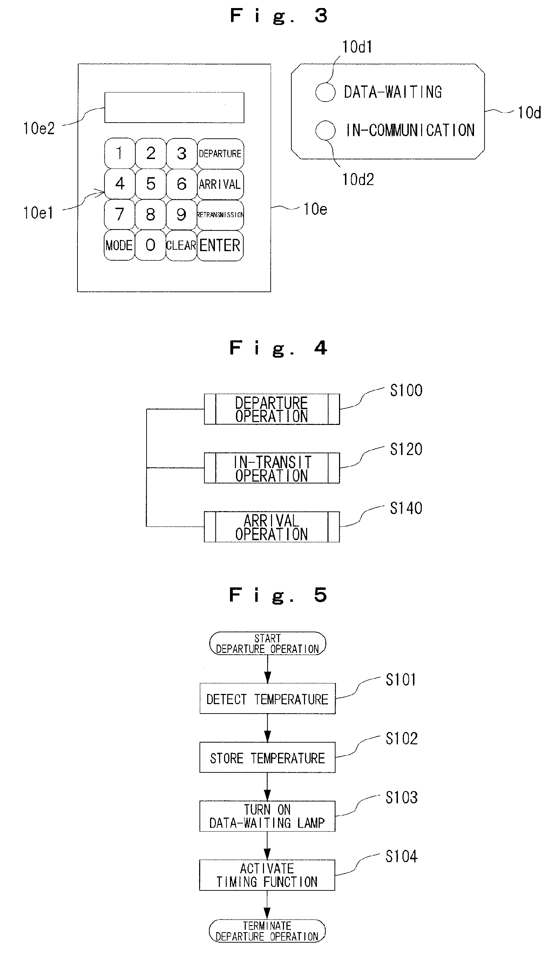

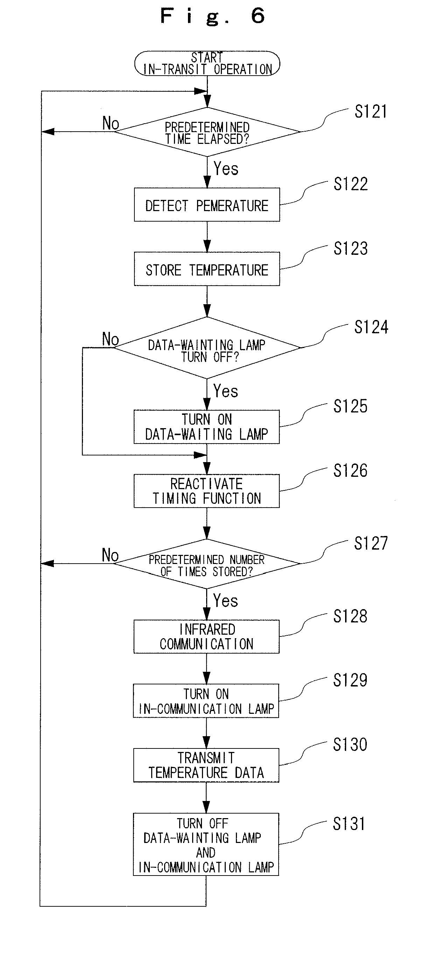

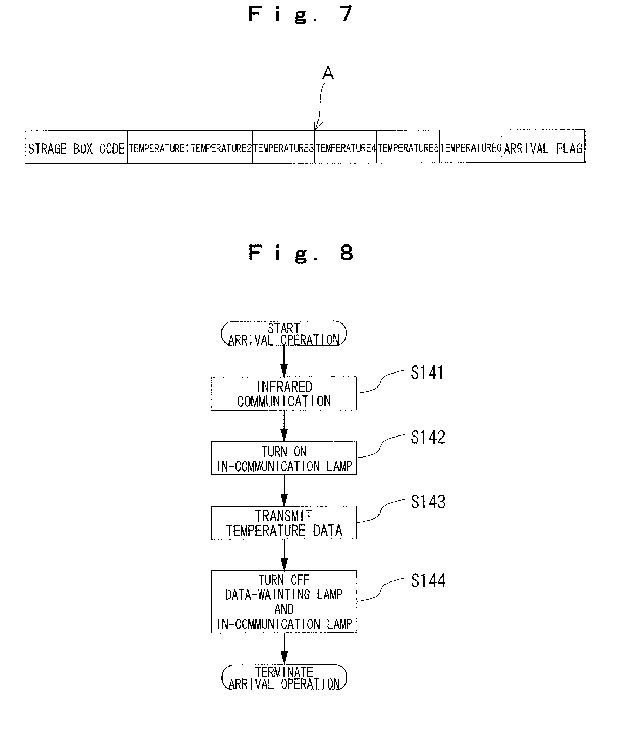

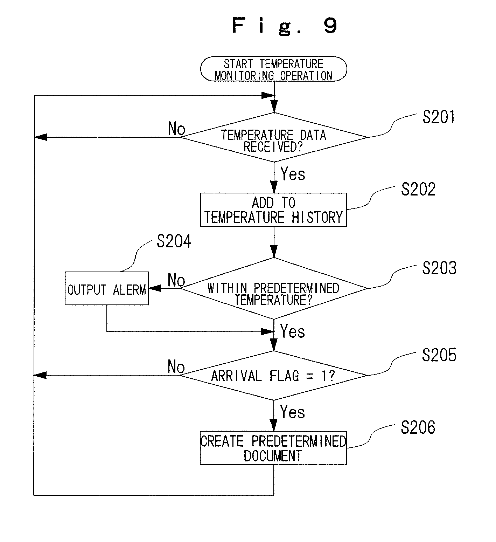

FIGS. 1-9 show a first embodiment of the present invention: FIG. 1 shows a configuration of a transportation management system; FIG. 2 is a block diagram of a control system configuration of the storage box shown in FIG. 1; FIG. 3 is a front view of a display and an input device provided on a surface of the storage box shown in FIG. 1; FIG. 4 shows an operation configuration of the storage box shown in FIG. 1; FIG. 5 is a flowchart of the departure operation shown in FIG. 4; FIG. 6 is a flowchart of the in-transit operation shown in FIG. 4; FIG. 7 shows an exemplary data structure of temperature data; FIG. 8 is a flowchart of the arrival operation shown in FIG. 4; and FIG. 9 is a flowchart of the temperature management operation executed by the aggregation server shown in FIG. 1. The embodiment will now be described in the context of blood as a constant-temperature-preserved article, unless otherwise described.

As show in FIG. 1, a transportation management system is composed of a plurality of storage boxes 10, a communication network N1, an aggregation server 20, a storage device 30, and a printer 40.

Each storage box 10 is a heat-insulated storage box in which one or more blood containers are stored. Each storage box 10 also comprises a communication device 11 which transmits temperature data as stated below via the communication network N1 to the aggregation server 20.

The communication network N1 is, for example, a wireless communication network provided by a telecommunications carrier, which enables communications between each storage box 10 and the aggregation server 20.

The aggregation server 20 is for managing transportation of each storage box 10 and comprises a receiver 21 and a controller 22. The receiver 21, which is for receiving predetermined data including temperature data transmitted by the outside world via the communication network N1, receives temperature data transmitted by each communication device 11 of each storage box 10 and outputs it to the controller 22. The controller 22, which is a well-known microprocessor composed of a CPU and memory such as RAM or ROM etc., outputs data to the storage device 30 and the printer 40 connected to the aggregation server 20 based on a program stored in its memory.

The storage device 30, which is a well-known mass storage device, outputs data to be stored to the controller 22 and also stores, as a temperature history 31 for each storage box 10, each temperature included in the temperature data input from the controller 22.

The printer 40, which is for outputting data obtained by the aggregation server 20, creates a predetermined document to be sent to a destination of blood.

As shown in FIG. 2, the body of the storage box 10 is composed of a controller 10a, an infrared port 10b connected to the controller 10a, a temperature sensor 10c, a display 10d, an input device 10e, a data logger 10f, and a secondary battery 10g.

The controller 10a, which is a well-known microprocessor composed of a CPU and memory such as RAM or ROM etc., outputs a control signal to each equipment connected to the controller 10a based on a program stored in its memory.

The infrared port 10b is for providing infrared communication with an adjacent external infrared port and uses, for example, IrDA (Infrared Data Association) as a communication standard.

The temperature sensor 10c, which is for detecting the internal temperature of the storage box 10, performs A/D conversion of the detected temperatures and outputs them to the controller 10a.

The display 10d is provided on a surface of the storage box 10 and has a Data-Waiting lamp 10d1 and an In-Communication lamp 10d2, which respectively indicate the existence or absence of data to be transmitted and communication states.

As shown in FIG. 3, the input device 10e is provided adjacent the display 10d and has a plurality of input buttons 10e1 and an input display screen 10e2, which respectively outputs the content input by operating input buttons 10el to the controller 10a and displays it on the input display screen 10e2. In addition, the input display screen 10e2 displays the internal temperature of the storage box 10 which is detected by the temperature sensor 10c, except during the operation of the input buttons 10e1.

The data logger 10f is an EEPROM (Electronically Erasable and Programmable ROM) such as a flash memory for storing temperatures detected by the temperature sensor 10c.

The secondary battery 10g is, for example, a lead acid storage battery or alkaline battery, which supplies power to the controller 10a and the data logger 10f, connected thereto.

In addition, as shown in FIG. 2, the communication device 11 provided at the storage box 10 is composed of a controller 11a, an infrared port 11b, a communication module 11c, a communication antenna 11d, and a secondary battery 11e.

The controller 11a, which is a well-known microprocessor composed of a CPU and memory such as RAM or ROM etc., connects to the infrared port 11b and the communication module 11c and outputs control signals to the infrared port 11b and the communication module 11c based on a program stored in its memory.

The infrared port 11b is for providing infrared communication with an adjacent external infrared port and uses, for example, IrDA (Infrared Data Association) as a communication standard.

The communication module 11c is for communicating the outside world and connects to the communication antenna 11d. The communication antenna 11d is wireless communication means for communicating the outside world through radio waves to transmit and receive data via the communication network N1 mentioned above.

The secondary battery 11e is, for example, a lead acid storage battery or alkaline battery which supplies power to the controller 11a and the communication module 11c, connected thereto.

While this embodiment provides the communication device 11 external to the storage box 10, it is not so limited and may integrate the communication device 11 into the storage box 10. In addition, while this embodiment provides infrared communication between the storage box 10 and the communication device 11, it is not so limited and may provide wired communication therebetween.

As shown in FIG. 4, the operation of the storage box 10 as configured above is composed of a departure operation S100, an in-transit operation S120, and an arrival operation S140.

Upon Departure button of the input buttons 10e1 being operated in transporting the storage box 10 in which blood is stored from its origin to its destination, the process executes the departure operation S100.

That is, as shown in FIG. 5, upon a departure signal being input from the input device 10e, the controller 10a outputs a control signal to the temperature sensor 10c to detect a current temperature (step S101), and stores the temperature input from the temperature sensor 10c in the data logger 10f (step S102). This allows the internal temperature of the storage box 10 to be detected and stored at the departure of transportation.

At this moment, the controller 10a outputs a control signal to the display 10d to turn on a Data-Waiting lamp 10dl (step S103) while activating its timing function (or timing program) to start to measure elapsed time (step S104), and terminates the departure operation S100. This allows the elapsed time to be measured since the detection of a temperature.

After the execution of the departure operation S100, the process executes the in-transit operation S120 during transportation of the storage box 10.

That is, as shown in FIG. 6, the controller 10a determines whether a predetermined time, e.g., 10 minutes, has elapsed since the timing function last activated (step S121), and repeats the operation of step S121 until 10 minutes pass.

If it is determined that 10 minutes have elapsed since the timing function last activated, then the controller 10a outputs a control signal to the temperature sensor 10c to detect a current temperature (step S122), and stores the temperature input from the temperature sensor 10c in the data logger 10f (step S123). This allows the internal temperature of the storage box 10 in transit to be detected and stored.

Then, the controller 10a determines whether the Data-Waiting lamp 10d1 is turned off (step S124). If the Data-Waiting lamp is lit, the controller 10a does not take any action, whereas if the lamp is turned off, the controller 10a outputs a control signal to the display 10d to turn on the Data-Waiting lamp 10d1 (step S125).

Then, the controller 10a reactivates its timing function to start to measure elapsed time from scratch (step S126). This allows the internal temperature of the storage box 10 to be detected and stored at every predetermined time interval.

Then, the controller 10a determines whether the number of times temperatures been stored in the data logger 10f is equal to a predetermined number of times, e.g., six (step S127).

If it is determined that the number of times temperatures been stored in the data logger 10f is not equal to six, then the controller 10a repeats the operations of steps S121-S127 until the number of times becomes equal to six. If the number of times temperatures been stored in the data logger 10f is equal to six, then the controller 10a creates temperature data including six temperatures stored in the data logger 10f while communicating the temperature data to and from the controller 11a of the communication device 11 via the infrared ports 10b and 11b (step S128), and outputs a control signal to the display 10d to turn on the In-Communication lamp 10d2 (step S129). This allows the temperature data to be transmitted every time the internal temperature of the storage box 10 is detected and stored a predetermined number of times.

An exemplary data structure of temperature data is now shown in FIG. 7. An inherent identification code, which has been previously stored for example in memory of the controller 10a, is stored in Storage Box Code of the temperature data A, and each of six temperatures, which have been stored in the data logger 10f, is stored in each of Temperatures 1-6, respectively. In addition, "0" is usually stored in Arrival Flag. In this respect, when a control signal is output to the temperature sensor 10c to detect a temperature, the controller 10a may store a temperature as well as a detection time of the temperature in the data logger 10f with its timing function (or timing program), and store each of the six detection times in each of Times 1-6 provided in the temperature data, respectively.

Upon receipt of the temperature data A from the infrared port 11b, the controller 11a transmits the temperature data A to the aggregation server 20 via the communication module 11c and the communication antenna 11d (step S130). This causes the temperature data A including the temperatures detected during transportation to be transmitted during transportation.

Then, the controller 10a receives acknowledgement data from the aggregation server 20 via the communication device 11 and outputs a control signal to the display 10d to turn off the Data-Waiting lamp 10d1 and the In-Communication lamp 10d2 (step S131), while deleting the temperatures stored in the data logger 10f to reset the number of times for storing to zero. This allows for determinations as to whether there is any temperature data A which has not been transmitted, and for retransmissions of the temperature data A by operating Retransmission button of the input buttons 10e1 even if a transmission error of the temperature data A occurs.

The controllers 10a and 11a repeat the operations of steps S121-S131 until the storage box 10 arrives at its destination.

Upon arrival of the storage box 10 at its destination and Arrival button of the input buttons 10el being operated, the process executes the arrival operation S140.

That is, upon the arrival signal being input from the input device 10e, the controller 10a immediately terminates the In-Transit operation S120 to execute the Arrival operation S140 while In-Communication lamp 10d2 is turned on, i.e., except a period when steps S129-S131 are being processed. In addition, when the arrival signal is input from the input device 10e during the process of steps S129-S131, the controller 10a, after the completion of step S131, terminates the In-Transit operation S120 to execute the Arrival operation S140.

As shown in FIG. 8, the controller 10a stores each of the temperatures that are stored in the data logger 10f in each of Temperatures 1-6 of the temperature data A, respectively, while storing "1" in Arrival Flag to create the temperature data A, and communicates the temperature data A to and from the controller 11a of the communication device 11 via the infrared ports 10b and 11b (step S141). The controller 10a also outputs a control signal to the display 10d to turn on the In-Communication lamp 10d2 (step S142).

Upon receipt of the temperature data A from the infrared port 11b, the controller 11a transmits the temperature data A to the aggregation server 20 via the communication module 11c and the communication antenna 11d (step S143). This causes the temperature data A to be transmitted even if the temperatures detected during transportation remains stored in memory without being transmitted when the storage box 10 arrives at its destination.

Then, the controller 10a receives acknowledgement data from the aggregation server 20 via the communication device 11, and outputs a control signal to the display 10d to turn off the Data-Waiting lamp 10dl and the In-Communication lamp 10d2 (step S144), while deleting the temperatures stored in the data logger 10f to reset the number of times for storing to zero, and terminating the Arrival operation S140. This allows for determinations as to whether there is any temperature data A which has not been transmitted, and for retransmissions of the temperature data A by operating Retransmission button of the input buttons 10el even if a transmission error of the temperature data A occurs.

While this embodiment detects and stores a temperature at every predetermined time interval during transportation in order to reduce power consumption due to the transmission of the temperature data A, and performs the transmission of the temperature data A every time the temperature is stored a predetermined number of times, it is not so limited and may provide real-time transmission of the temperature data including the temperatures detected during transportation.

In addition, the aggregation server 20 continues to execute the temperature monitoring operation until the transportation management system stops its operation.

That is, as shown in FIG. 9, the controller 22 determines whether any temperature data A has been received from any one of the storage boxes 10 via the receiver 21 (step S201), and repeats the operation of step S201 until the temperature data A is received.

If it is determined that temperature data A is received from a storage box 10, then a temperature history 31 corresponding to Storage Box Code is read from the storage device 30, and the Temperatures 1-6 are added to the temperature history 31 and stored in the storage device 30 (step S202). However, if there is no temperature history 31 stored in the storage device 30 that corresponds to Storage Box Code, then a temperature history 31 corresponding to Storage Box Code is newly created and stored in the storage device 30 together with the Temperatures 1-6. This allows the temperature of blood to be known during transportation that is stored in a storage box 10 being transported.

Then, the controller 22 determines whether all of these Temperatures 1-6 are within a predetermined temperature, e.g., within a temperature suitable for storing blood (step S203). As a result, one may know whether the temperature of blood stored in a storage box 10 is within a predetermined temperature during transportation.

If it is determined that some one of these Temperatures 1-6 of the temperature data A is not within a temperature suitable for storing blood, then the controller 22 outputs an alert from, e.g., an alerter not shown (step S204). As a result, one may know the temperature of blood in advance that is stored in a storage box 10 before degradation of blood occurs.

After the completion of step S204 or if it is determined that all of these Temperatures 1-6 are within the temperature suitable for storing blood, the controller 22 determines whether Arrival Flag of the temperature data A is equal to "1" (step S205).

If it is determined that Arrival Flag of the temperature data A is not equal to "1", i.e., it is equal to "0", the controller 22 repeats the operations of steps S201-S205, whereas if it is determined that Arrival Flag of the temperature data A is equal to "1", the controller 22 reads a temperature history 31 of that storage box 10 from the storage device 30, outputs it to the printer 40 to create a document (step S206), and sends it by facsimile, etc. to a destination. This causes a document to be automatically created that has an internal temperature history of a storage box 10 being transported.

While this embodiment creates a document to provide in-transit information to a destination, it is not so limited and may not create any document. In addition, while a temperature is used herein that is within a predetermined range suitable for storing blood, other temperatures may be used that are within a certain range in which any degradation of blood would not occur, and the controller 22 may output an alert from an alerter not shown when some one of these Temperatures 1-6 is not within a range in which any degradation of blood would not occur, i.e., within a range in which some degradation of blood would occur. As a result, one may know any degradation of blood stored in a storage box 10 during transportation.

As such, in accordance with this embodiment, it will be possible to know, during transportation, the temperature of blood stored in each storage box 10 being transported, because each storage box 10 transmits temperature data A including the temperatures detected during transportation, and the aggregation server 20 obtains the temperature data A, thereby managing the temperature of blood stored in a storage box 10 even if the internal temperature of the storage box 10 changes and obviating any degradation of blood during transportation, for example by informing transporters of the storage box 10 of any temperature changes by mobile phone, e-mail, etc.

In addition, it will be possible to know, during transportation, whether the temperature of blood stored in a storage box 10 being transported is within a predetermined range, because a determination is made whether all of these Temperatures 1-6 are within a suitable range for storing blood, thereby providing more accurate management of the temperature of blood stored in each storage box 10 and facilitating the beginning of subsequent operations such as arrangement for different blood, for example by informing the destination of the storage box 10 of any degradation of blood during transportation before its arrival.

In addition, it will also be possible to reduce the workload with document creation since a document will be automatically created that has internal temperature history of a storage box 10 being transported.

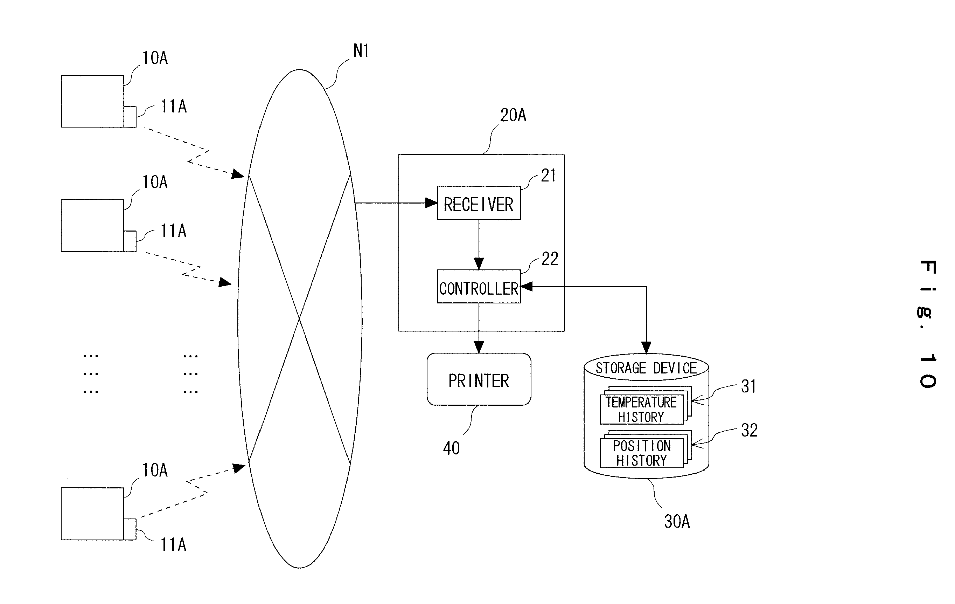

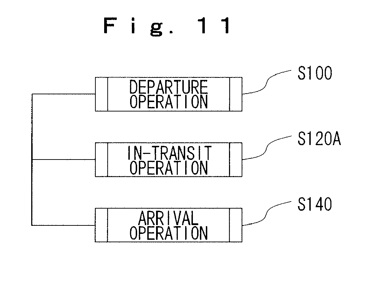

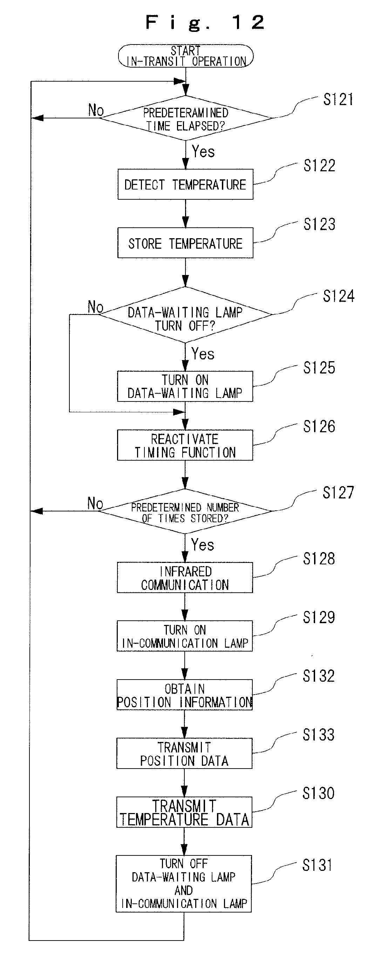

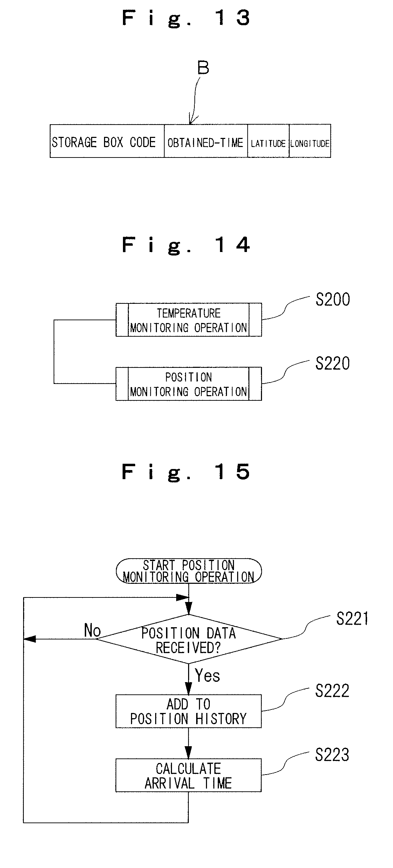

FIGS. 10-15 show a second embodiment of the present invention: FIG. 10 shows a configuration of a transportation management system; FIG. 11 shows an operation configuration of the storage box shown in FIG. 10; FIG. 12 is a flowchart of the in-transit operation shown in FIG. 11; FIG. 13 shows an exemplary data structure of position data; FIG. 14 shows an operation configuration of the aggregation server shown in FIG. 10; and FIG. 15 is a flowchart of the position monitoring operation shown in FIG. 14.

The difference between the second embodiment and the first embodiment is that, in addition to temperature data, each storage box transmits position data including position information of a communication device provided at a storage box being transported, and that an aggregation server identifies a position of the storage box being transported by obtaining the position data. In this respect, the same reference numerals represent the same components as the first embodiment mentioned above and description thereof will be omitted.

That is, as shown in FIG. 10, a storage device 30A stores in addition to the temperature history 31, as a position history 32 for each communication device 11A provided at each storage box 10A, position information included in position data which has been input from the aggregation server 20A as stated below.

As shown in FIG. 11, the process of the storage box 10A is composed of a departure operation S100, an in-transit operation S120A, and an arrival operation S140, where the departure operation S 100 and the arrival operation S140 are same as those of the first embodiment.

As shown in FIG. 12, the in-transit operation S120A performs steps S121-S129 in a similar manner to the first embodiment, and then, upon receipt of the temperature data A from the infrared port 11b, the controller 11a transmits a command to obtain position and time information via the communication module 11c and the communication antenna 11d and obtains the position and time information provided by an operator of the communication network N1 (step S132). As a result, one may obtain position information of a storage box 10A being transported.

In addition, the storage box may obtain time information with its timing function (or timing program) instead of transmitting commands to obtain time information. Further, the position information provided by an operator of the communication network N1 may be of any form and type such as simple position information based on base station information, position information of the GPS (Global Positioning System) using artificial satellites, or position information of the DGPS (Differential GPS) for correcting positions obtained from artificial satellites with signals from GPS base stations.

Then, the controller 11a creates position data including position and time information being obtained and transmits the position data to the aggregation server 20A via the communication module 11c and the communication antenna 11d (step S133). This causes the position data including position information obtained during transportation to be transmitted during transportation.

An exemplary data structure of position data is now shown in FIG. 13. An inherent identification code, which has been previously stored for example in memory of the controller 10a, is stored in Storage Box Code of the position data B, time information obtained by an operator of the communication network N1 is stored in Obtained-Time, and position information obtained by the operator of the communication network N1 is stored in Latitude and Longitude, respectively.

Then, the operations of steps S130-S131 are performed in a similar manner to the first embodiment, and the operations of steps S120-S131 are repeated until the storage box 10A arrives at its destination.

While this embodiment obtains position information and the position data B at the time of transmission of the temperature data A in order to reduce power consumption due to the transmission of the temperature data A, it is not so limited and may transmit the position data independently from the transmission of the temperature data A.

As shown in FIG. 14, the process of the aggregation server 20A is composed of a temperature monitoring operation S200 and a position monitoring operation S220, where the Temperature monitoring operation S200 is same as that of the first embodiment.

The aggregation server 20A continues to execute the position monitoring operation S220 in parallel to the temperature monitoring operation S200 until the transportation management system stops its operation.

That is, as shown in FIG. 15, the controller 22 determines whether any position data B has been received from any one of the storage boxes 10A via the receiver 21 (step S221), and repeats the operation of step S221 until the position data B is received.

If it is determined that position data B is received from a storage box 10A, then a position history 32 corresponding to Storage Box Code is read from the storage device 30A, and Obtained-Time, Longitude and Latitude are added to the position history 32 and stored in the storage device 30A (step S222). However, if there is no position history 32 stored in the storage device 30A that corresponds to Storage Box Code, then a position history 32 corresponding to Storage Box Code is newly created and stored in the storage device 30A together with Obtained-Time, Longitude, and Latitude. This allows the position of blood to be identified during transportation that is stored in a storage box 10A being transported.

Then, the controller 22 reads a position history 32 of that storage box 10A from the storage device 30A to calculate an arrival time at a destination of the storage box 10A based on the changes in Obtained-Time, Longitude, and Latitude (step S223). This causes an arrival time to be calculated at a destination of a storage box 10A during transportation.

As such, in accordance with this embodiment, in addition to the same advantages as the first embodiment, because each storage box 10A obtains, during transportation, the position information provided by an operator of the communication network N1 to transmit the position data B including the position information during transportation, and the aggregation server 20A obtains the position data B to manage positions of each storage box 10A being transported, the transportation schedule can be adjusted to ensure, for example, that after a storage box 10A arrives at one destination, new blood is stored in the storage box 10A and transported to the next destination, thereby increasing the efficiency of transportation of blood.

In addition, because an arrival time at a destination of a storage box 10A is calculated based on the position data B obtained during transportation, thereby providing accurate adjustment of the transportation schedule and further increasing the efficiency of transportation of blood.

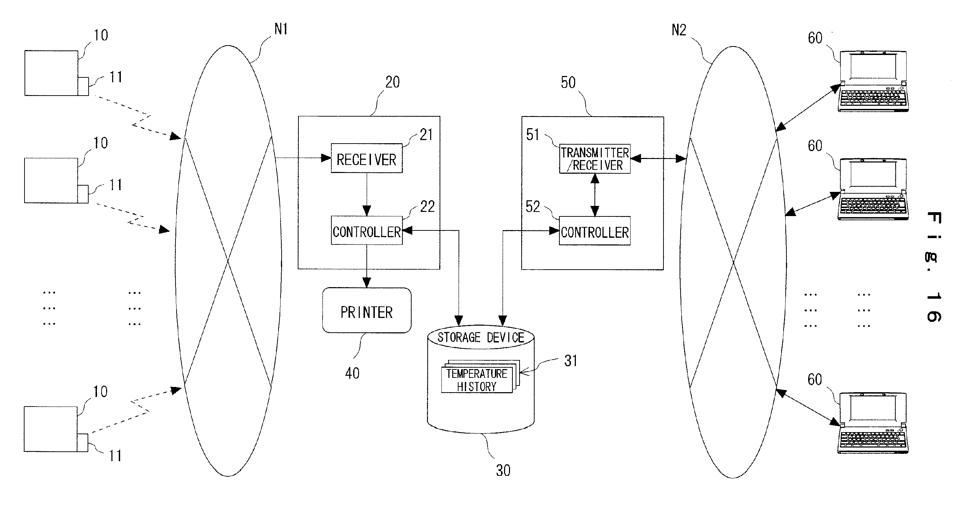

FIG. 16 is a configuration diagram of a transportation management system showing a third embodiment of the present invention.

The difference between the third embodiment and the first embodiment is that temperature data received from each storage box can be provided over an Internet network. In this respect, the same reference numerals represent the same components as the first embodiment mentioned above and description thereof will be omitted.

That is, as shown in FIG. 16, the transportation management system is composed of a web server 50, an Internet network N2, and a plurality of terminals 60 in addition to the plurality of storage boxes 10, the communication network N1 the aggregation server 20, the storage device 30, and the printer 40.

Each terminal 60, which is a well-known personal computer connectable to the Internet network N2, obtains files, data, etc., that present on the Internet network N2 by specifying their URLs.

The web server 50, which is for connecting to the Internet network N2 to transmit files, data, etc., requested by URL specification, comprises a transmitter/receiver 51 and a controller 52. The transmitter/receiver 51 receives requests transmitted from the outside world via the Internet network N2 and outputs them to the controller 52, while outputting predetermined data input from the controller 52. The controller 52, which is a well-known microprocessor composed of a CPU and memory such as RAM or ROM etc., reads a temperature history 31 stored in the storage device 30 and creates data corresponding to a request to output it to the transmitter/receiver 51 based on a program stored in its memory. This allows temperature data A received from a storage box 10 being transported to be provided to each terminal 60 via the Internet network N2.

While this embodiment comprises the web server 50 different from the aggregation server 20, it is not so limited, and thus the aggregation server 20 and the web server 50 may be integrated into a single server or each may be composed of several servers, respectively.

As such, in accordance with this embodiment, in addition to the same advantages as the first embodiment, it will be possible to know, during transportation, the internal temperature of the storage box 10 being transported without any dedicated line provided, because temperature data A received from a storage box 10 being transported can be provided to each terminal 60 via the Internet network N2.

The described embodiments are illustrative and should not be construed as restrictive. It is intended that the scope of the present invention is defined by the appended claims and the present invention encompasses all variations that fall within the spirit of the claims.

## Claims

1. A transportation management system for managing transportation of a heat-insulated storage box (10,10A) having constant-temperature-preserved articles stored therein and comprising temperature detection means (10c) for detecting the internal temperature, the transportation management system comprising:
a communication device (11,11A) having transmitting means (11c,11d) provided at the storage box (10,10A) for transmitting predetermined data to the outside world via a communication network (N1), and temperature data transmission means (11a) provided at the storage box (10,10A) for transmitting, during transportation by the transmitting means (11c,11d), temperature data (A) including temperatures detected by the temperature detection means (10c) during transportation; and
a server (20,20A) having receiving means (21) for receiving the predetermined data including the temperature data (A) transmitted by the communication device (11,11A) via the communication network (N1), the server (20,20A) obtaining the temperature data (A) received by the receiving means (21).

2. The transportation management system according to claim 1, wherein
the server (20,20A) has determination means (22) for determining whether the internal temperature of the storage box (10, 10A) is within a predetermined range based on the obtained temperature data (31).

3. The transportation management system according to claim 1, wherein
the communication device (11) has position data transmission means for obtaining its position information provided by an operator of the communication network (N1) during transportation to transmit position data (B) including the position information by the transmitting means (11c,11d) during transportation; and
the server (20,20A) has position identification means (22) for obtaining the position data (B) received by the receiving means (21) to identify a position of the storage box (10, 10A) being transported.

4. The transportation management system according to claim 3, wherein
the position identification means (22) has means for calculating during transportation an arrival time at a destination of the storage box (10,10A) based on the obtained position data (32).

5. The transportation management system according to any one of claims 1 to 4, wherein
the server (20,20A) has output means (40) for outputting the obtained predetermined data.

6. The transportation management system according to any one of claims 1 to 4, wherein
the server (20,20A) has data providing means (50) capable of providing the obtained predetermined data to an external terminal (60) over an Internet network (N2).

7. The transportation management system according to claim 2, wherein
the communication device (11) has position data transmission means for obtaining its position information provided by an operator of the communication network (N1) during transportation to transmit position data (B) including the position information by the transmitting means (11c,11d) during transportation; and
the server (20,20A) has position identification means (22) for obtaining the position data (B) received by the receiving means (21) to identify a position of the storage box (10,10A) being transported.

8. The transportation management system according to claim 7, wherein
the position identification means (22) has means for calculating during transportation an arrival time at a destination of the storage box (10, 10A) based on the obtained position data (32).

9. The transportation management system according to claim 7 or 8, wherein
the server (20,20A) has output means (40) for outputting the obtained predetermined data.

10. The transportation management system according to claim 7 or 8, wherein
the server (20,20A) has data providing means (50) capable of providing the obtained predetermined data to an external terminal (60) over an Internet network (N2).

11. The transportation management system according to claim 5, wherein
the server (20,20A) has data providing means (50) capable of providing the obtained predetermined data to an external terminal (60) over an Internet network (N2).

12. The transportation management system according to claim 9, wherein
the server (20,20A) has data providing means (50) capable of providing the obtained predetermined data to an external terminal (60) over an Internet network (N2).
